# EUROPÄISCHE PATENTSCHRIFT

(11) **EP 1 738 937 B1**
(45) Veröffentlichungstag und Bekanntmachung des Hinweises auf die Patenterteilung: **16.11.2011**
(21) Anmeldenummer: 06113649.5
(22) Anmeldetag: 08.05.2006
(51) Int. Cl.: B60C 25/132, B23P 21/00

(54) **Verfahren und Vorrichtung zur Montage eines Luftreifens**
Method and device for the assembly of a pneumatic tyre
Procédé et dispositif d'assemblage de pneumatiques

(30) Priorität: 29.06.2005 DE 102005030692
(43) Veröffentlichungstag der Anmeldung: 03.01.2007
(73) Patentinhaber: Schenck RoTec GmbH, 64293 Darmstadt (DE)
(72) Erfinder: Rogalla, Martin, 64297, Darmstadt (DE); Lemser, Matthias, 64331, Weiterstadt (DE); Peinelt, Andreas, 64319, Pfungstadt (DE); Lipponer, Georg, 64673, Zwingenberg (DE)
(74) Vertreter: Haar, Lucas Heinz Jörn

(56) Entgegenhaltungen:
- GB-A- 840 076
- US-A- 5 170 828
- US-A1- 2001 000 391

## Beschreibung

Die Erfindung betrifft ein Verfahren zur Montage eines Luftreifens auf eine Tiefbettfelge eines Kraftfahrzeugrades und eine Vorrichtung zur Durchführung des Verfahrens.

Bei einem seither üblichen Verfahren zum maschinellen Montieren von Fahrzeugrädern wird die Felge mit der Felgenschüssel nach oben oder unten in einer horizontalen Lage mittels einer Spannvorrichtung festgehalten. Der Luftreifen wird schräg auf die Felge aufgelegt und soweit an die Felge herangeschoben, dass der untere Reifenwulst mit einem unteren Abschnitt in das Tiefbett der Felge gedrückt wird, während er mit seinem oberen Abschnitt über das obere Felgenhorn hinausragt. Anschließend werden von oben Aufziehwerkzeuge auf den Reifen und die Felge abgesenkt, welche die Reifenseitenwand nach unten in die Höhe des Tiefbetts der Felge drücken. Durch Rotation der Aufziehwerkzeuge um die Drehachse der Felge wird dann der Reifenwulst kontinuierlich über das obere Felgenhorn gezogen. Dieses bekannte Verfahren hat den Nachteil, dass es den Reifen bei der Montage sehr stark beansprucht. Bei schwierig zu montierenden Reifen kann es außerdem zu Problemen kommen, weil der Reifenwulst aufgrund der Eigensteifigkeit des Reifens während des Montagevorgangs nicht im erforderlichen Maße im Tiefbett verbleibt. Am Ende der Aufziehbewegung ist dann die freie Länge des Reifenwulstes für das Überspringen des Felgenhorns nicht ausreichend, so dass erhebliche Schubkräfte beim Weiterdrehen der Aufziehwerkzeuge auftreten. Weitere technische Probleme ergeben sich bei dem bekannten Verfahren auch aus der Forderung nach großer Flexibilität im Hinblick auf die zu verarbeitenden unterschiedlichen Kombinationen von Felgen und Luftreifen, sowie aus der Forderung nach kurzen Maschinentaktzeiten.

Bei sehr einfach zu montierenden Reifen erfolgt das Aufziehen beider Reifenwülste in der zuvor beschriebenen Weise in einem einzigen Arbeitsgang gemeinsam. Ist es hingegen erforderlich, die Reifenwülste getrennt zu montieren, so werden an das Aufziehwerkzeug gegensätzliche Forderungen gestellt. Für das Aufziehen des ersten Wulstes muß das Werkzeug besonders schmal ausgeführt sein, damit es problemlos zwischen dem Felgenhorn und dem oberen Wulst eintauchen kann. Beim Anheben im Anschluß an die Montage des ersten Wulstes darf es nicht am Reifen verhaken. Für die Montage des zweiten Wulstes ist es hingegen wünschenswert, ein breites Aufziehwerkzeug zur Verfügung zu haben, da Reifen mit kleiner Höhe und großer Eigensteifigkeit dazu tendieren, von einer schmalen Aufziehrolle abzuspringen, so dass sich das Werkzeug im weiteren Verlauf des Montageprozesses zwischen Felgenhorn und Reifenwulst verkeilt.

Für die Gestaltung der Reifenmontage ergeben sich weitere technische Probleme aus der Forderung nach großer Flexibilität im Hinblick auf die zu verarbeitenden Kombinationen von Felge und Reifen sowie durch die Forderung nach kurzen Maschinentaktzeiten.

Ein Verfahren zur Montage eines Luftreifens auf eine Tiefbettfelge nach dem Oberbegriff des Anspruchs 1 ist aus US 5 170 828 A bekannt, Nach diesem Verfahren wird der Luftreifen mittels einer Fördereinrichtung von oben auf eine in einer Spannvorrichtung gehaltene Felge aufgelegt und dann gemeinsam mit der Felge in eine Montage- und Füllstation gefördert. Dort wird der Reifen mittels einer Füllglocke, die von einer Handhabungseinrichtung bewegt wird und auf die Reifenwülste einwirkt, über die Felge gestreift und dann mit Hilfe der Füllglocke aufgepumpt.

Aus US 4,621,671 ist eine Anlage zur Montage von Luftreifen auf Tiefbettfelgen bekannt, bei der die Felgen auf Paletten in vorgegebenem Abstand längs einer Förderstraße zu zwei hintereinander liegenden Reifenmontagevorrichtungen gefördert werden. Die Luftreifen werden über eine Reifenbenetzungsstation vor der ersten Reifenmontagevorrichtung in die Förderstraße derart eingeschleust, dass jeweils ein Reifen in Förderrichtung vor eine Felge gelangt und in Schräglage gekippt auf die nachfolgende Felge aufgelegt wird. Beim Durchlaufen der ersten Montagevorrichtung wird dann der Luftreifen mit Hilfe einer darüber hinwegrollenden Walze derart an die Felge angedrückt, dass der untere Reifenwulst über das Felgenhorn gestreift wird. Anschließend wird in der zweiten Montagestation der obere Wulst des vormontierten Reifens mit Hilfe herkömmlicher, am Felgenhorn entlanggeführter Montagewerkzeuge montiert. Dieses bekannte Verfahren hat den Nachteil, dass der Luftreifen beim Montieren des unteren Wulstes durch Überrollen mit einer Walze sich unkontrolliert bewegen und dadurch beschädigt werden kann. Des weiteren fordert jede Änderung des Reifentyps oder des Felgentyps eine aufwendige Justierung der Reifenzuführung und der Bewegung der Montagewalze.

Es ist weiterhin aus WO99/42309 eine Vorrichtung zur Montage eines Luftreifens auf eine Felge bekannt, welche einen Roboter mit einem in drei Richtungen beweglichen Gelenkarm umfaßt, der entlang einer Bewegungsbahn bewegbar ist, die aus einer Vielzahl von programmierbaren, vorbestimmten und im Speicher einer Zentraleinheit abgelegten Bewegungsbahnen auswählbar ist. Der Gelenkarm trägt an seinem freien Ende ein Montagewerkzeug, welches zur Montage eines Reifenwulstes am Felgenrand entlang bewegt wird. Der Roboter enthält Sensoren, die die Belastung des Gelenkarms messen, und das Steuerprogramm des Roboters enthält eine Überwachungsfunktion, welche die Bewegung des Werkzeugs anhält, wenn die Belastung einen vorbestimmten Wert überschreitet. Die Vorrichtung weist außerdem eine Spannvorrichtung auf, die den Reifen vor der Montage in eine Kipplage drückt und eine Drehung des Reifens auf der Felge verhindert.

Der Erfindung liegt die Aufgabe zugrunde, ein Verfahren zur wenigstens einseitigen, automatischen Montage von Luftreifen auf Tiefbettfelgen anzugeben, welches die Luftreifen bei der Montage schont, sich für eine Reihe unterschiedlicher Kombinationen von Tiefbettfelgen und Luftreifen eignet und ein einfaches Einrichten ermöglicht. Es ist weiterhin Aufgabe der Erfindung, eine zur Durchführung des Verfahrens geeignete Vorrichtung zu schaffen, die sich durch geringen Bauaufwand auszeichnet und die einfach eingerichtet und optimiert werden kann.

Hinsichtlich des Verfahrens wird diese Aufgabe durch die in Anspruch 1 angegebenen Verfahrensmerkmale gelöst. Vorteilhafte Weiterbildungen des Verfahrens sind in den Ansprüchen 2 bis 8 angegeben.

Hinsichtlich der Vorrichtung wird die Aufgabe durch die in Anspruch 9 angegebene Erfindung gelöst. Vorteilhafte Ausgestaltungen der Vorrichtung sind in den Ansprüchen 10 bis 23 angegeben.

Nach dem erfindungsgemäßen Verfahren wird der für die Montage bereitgestellte Luftreifen in seiner Bereitstellungsposition von einer Handhabungseinrichtung mittels eines Greifers an seinem Außenumfang gegriffen und durch radiales Spannen bis zur Beendigung der Montage von zumindest einem Reifenwulst kontinuierlich von dem Greifer kraftschlüssig gehalten, an die in einer Spannvorrichtung gehaltene Felge herangeführt und durch eine kontrollierte Bewegung der Handhabungseinrichtung mit zumindest dem einen der Felge zugekehrten Reifenwulst über ein Felgenhorn der Felge gestreift.

Das erfindungsgemäße Verfahren hat den Vorteil, dass die Handhabungseinrichtung eine vorgegebene oder frei programmierbare Positionierung und Bewegung des Reifens ausführen kann, die genau den Montagerfordernissen entspricht. Die Kräfte und Momente, die bei der Montage auftreten, bleiben kleiner als bei den seither bekannten Montageverfahren. Der Reifen wird daher geschont. Da die Handhabungseinrichtung den Reifen während des Montagevorgangs hält, kann dieser keine unkontrollierten Bewegungen ausführen. Die Einhaltung eines eingestellten und optimierten Bewegungsablaufs ist somit gewährleistet. Das erfindungsgemäße Verfahren hat weiterhin den Vorteil, dass es von der Ausbildung des Reifens und der Ausbildung der Felge bzw. deren Abmessungen in erheblichem Maße unabhängig ist. Zum Halten und Spannen unterschiedlicher Reifen- und Felgengrößen genügt es, den Arbeitshub der Vorrichtungen zum Halten und Spannen und die Positionierung und Bewegung des Reifens entsprechend anzupassen. Üblicherweise werden diese Bewegungsabläufe mittels einer programmierbaren Servosteuerung, beispielsweise eine CNC-Steuerung, gesteuert, so dass durch die Eingabe anwendungsspezifischer Daten und Programme die jeweilige Einrichtung des Systems auf die vorgesehene Anwendung auf einfache Weise erfolgen kann.

Ein Vorzug des erfindungsgemäßen Verfahrens ist weiterhin darin zu sehen, dass mit Hilfe der Handhabungseinrichtung der zu montierende Reifen von einer den Reifen bereitstellenden Fördereinrichtung abgeholt, zu einer Benetzungsstation bewegt und anschließend montiert werden kann. Während des gesamten Ablaufs wird der Reifen von der Handhabungseinrichtung gehalten und geführt. Dieses ermöglicht große Fördergeschwindigkeiten und dementsprechend kurze Taktzeiten und vermeidet Fehlpositionieren des Reifens bei der Übergabe von einer Fördereinrichtung an die nächste.

Das erfindungsgemäße Verfahren bietet weiterhin die vorteilhafte Möglichkeit, während der Reifenmontage den Reifen zu matchen. Unter Matchen versteht man das Ausrichten des Reifens gegenüber der Felge in einer definierten Winkelstellung, um die Rundlaufeigenschaften des Rades zu optimieren. Reifen und Felge besitzen hierzu Markierungen, die durch Drehen des Reifens relativ zur Felge zur Deckung gebracht werden müssen. Seither wird das Matchen nach der

Montage des Reifens in einer besonderen Maschine durchgeführt, da sich der Reifen bei der Montage gegenüber der Felge unkontrolliert verdrehen kann. Diese Gefahr besteht insbesondere bei der Montage des ersten Reifenwulstes. Bei dem Verfahren nach der Erfindung wird der Reifen von der Handhabungseinrichtung auch während der Montage gehalten und kann daher in die definierte Matchstellung auf der Felge gebracht werden, wobei zum Erreichen der Matchstellung der Reifen mit Hilfe der Handhabungseinrichtung oder die Felge in oder mit der Spannvorrichtung gedreht werden können. Beim Montieren des zweiten Wulstes lässt sich ein Verdrehen des Reifens gegenüber der Felge weitgehend ausschließen.

Das erfindungsgemäße Verfahren kann zur Montage nur eines Reifenwulstes oder in geeigneten Fällen auch zur Montage beider Reifenwulste angewendet werden. Soll eine automatische Montage sehr vieler unterschiedlicher Reifentypen möglich sein, so kann erfindungsgemäß der erste Reifenwulst mit Hilfe der Handhabungseinrichtung nach dem im Anspruch 1 angegebenen Verfahren und der zweite Reifenwulst mit Hilfe einer nachgeschalteten, herkömmlichen Montageeinrichtung mit an dem Felgenhorn entlanggeführter Montagewerkzeuge erfolgen. Eine solche Kombination beider Verfahrensweisen ermöglicht kurze Taktzeiten, wenn beide Montageverfahren gleichzeitig genutzt werden können, und kann auch dann eingesetzt werden, wenn wegen Reifen- oder Felgenausführung nur die herkömmliche Verfahrensweise möglich ist.

Eine Vorrichtung zur Durchführung des Verfahrens umfaßt nach der Erfindung als Handhabungseinrichtung einen Industrieroboter mit einem in drei Richtungen bewegbaren Gelenkarm, der an seinem freien Ende einen vorzugsweise relativ zum Gelenkarm bewegbaren Greifer zum Greifen und Halten von Luftreifen trägt. Der Greifer ist so gestaltet, dass die Reifen an ihrem Außenumfang gegriffen und durch radiales Spannen kraftschlüssig gehalten werden können. Vorzugsweise wird der Reifen an drei oder mehr am Umfang verteilten Punkten gehalten, die auf der Reifenlauffläche liegen.

Um eine definierte Position des von dem Greifer gehaltenen Reifens relativ zum Gelenkarm zu gewährleisten, weist der Greifer radial bewegliche Greiferfinger auf, deren Radialbewegungen synchronisiert sind. Der Greifer ist außerdem mit Anschlagflächen versehen, welche auf der Reifenseitenwand aufsetzen, um den Reifen in axialer Richtung relativ zum Greifer zu positionieren und um Axialkräfte bei der Reifenmontage zu übertragen. Vorzugsweise sind die Anschlagflächen an den beweglichen Greiferfingern angeordnet, so dass ihre radiale Erstreckung vom Durchmesser der zu montierenden Reifen unabhängig ist.

Der Greifer kann an dem Gelenkarm um eine im Zentrum der Greiferfinger liegende Mittelachse drehbar und mit Hilfe eines Stellantriebs in eine beliebige Drehwinkelstellung bewegbar und in dieser feststellbar sein. Hierdurch wird ein Drehen des Reifens zum Matchen von Reifen und Felge bei der Montage ermöglicht.

Nach einem weiteren Vorschlag der Erfindung kann vorgesehen sein, dass der Luftreifen zur Erleichterung des Montageprozesses mit Hilfe der Handhabungseinrichtung radial derart verformt wird, dass der zu monierende Reifenwulst eine ovale Form annimmt. Um dies zu ermöglichen, können die Greiferfinger derart gesteuert sein, dass sie eine definierte asynchrone Spannbewegung ausführen.

Das erfindungsgemäße Verfahren sieht weiterhin vor, dass der Luftreifen vor seiner Montage mit Hilfe der Handhabungseinrichtung in eine Benetzungsstation zum Benetzen der Reifenwülste mit Gleitmittel gefördert und in der Benetzungsstation mit den Reifenwülsten an einer Auftrageinrichtung für das Gleitmittel entlang bewegt wird. Durch diesen Verfahrensschritt wird eine sehr einfache und kostengünstige Gestaltung der Benetzungsstation ohne das Erfordernis bewegter Auftrageinrichtungen und besonderer Fördereinrichtungen ermöglicht.

Die erfindungsgemäße Vorrichtung umfaßt weiterhin eine Montagestation mit einer Spannvorrichtung zum Halten der Felge während der Reifenmontage. Zum Matchen von Felge und Reifen kann die Spannvorrichtung um die Rotationsachse der Felge drehbar und in einer beliebigen Drehwinkelstellung feststellbar sein.

Weiterhin kann im Arbeitsbereich der Handhabungseinrichtung eine Benetzungsstation mit einer Auftrageinrichtung, insbesondere einer Bürste, zum Benetzen der Reifenwülste mit einem Gleitmittel angeordnet sein. Vorzugsweise befindet sich die Benetzungsstation unmittelbar am Ende einer Fördereinrichtung zum Zuführen der zu montierenden Reifen. Es kann auch vorgesehen sein, die Benetzungsstation in den Endabschnitt der Förderstrecke der genannten Fördereinrichtung zu integrieren.

Die Erfindung wird nachfolgend anhand von Ausführungsbeispielen näher erläutert, die in der Zeichnung dargestellt sind. Es zeigen
- Figur 1: eine schematische Darstellung einer Handhabungseinrichtung nach der Erfindung mit Reifenzuführung und Benetzungsstation,
- Figur 2: eine perspektivische Darstellung eines Greifers der Handhabungseinrichtung,
- Figur 3: eine Ausführung eines Greiferfingers im Schnitt,
- Figur 4: das Benetzen der Reifenwülste in einer Benetzungsstation nach der Erfindung,
- Figur 5: eine schematische Darstellung einer in die Fördereinrichtung zum Zuführen von Reifen integrierten Benetzungsstation,
- Figur 6: das Benetzen eines Reifens mit Hilfe der Benetzungsstation gemäß Figur 5 und
- Figur 7: eine Schnittdarstellung von Tiefbettfelge und Luftreifen in einer Zwischenposition während der Montage des unteren Reifenwulstes,
- Figur 8: eine schematische Darstellung der Erfassung des Matchpunktes mittels einer Kamera an der Handhabungseinrichtung,

- Figur 9: eine schematische Darstellung des Matchens vor der Montage des Reifens.

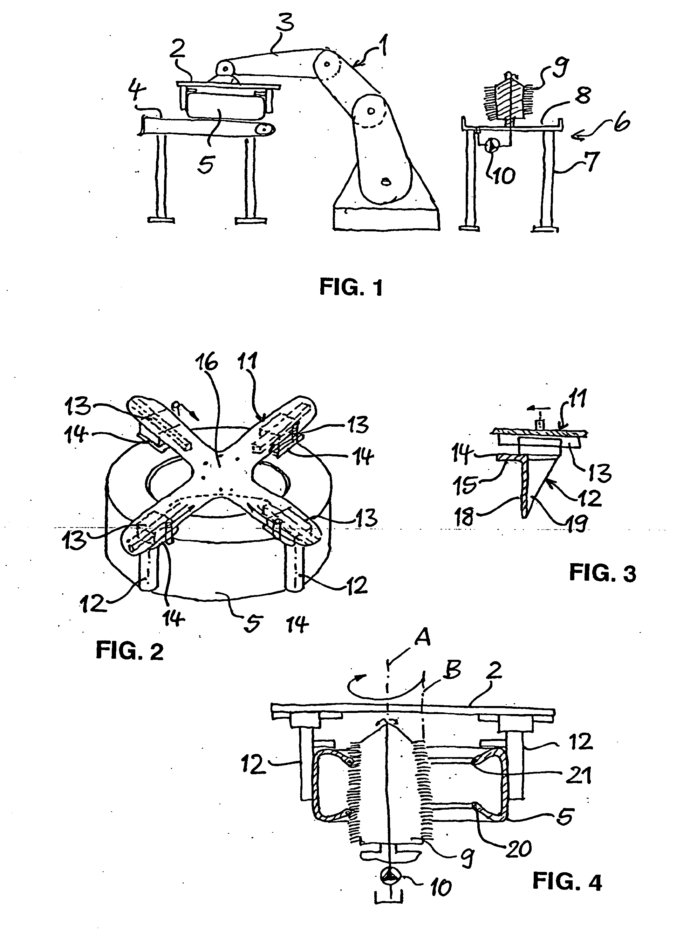

In Figur 1 ist eine Handhabungseinrichtung 1 mit einem Greifer 2 dargestellt, die zur Reifenmontage nach dem zuvor beschriebenen Verfahren bestimmt ist. Bei der Handhabungseinrichtung 1 handelt es sich um einen Industrieroboter mit einem mehrere Bewegungsachsen aufweisenden Gelenkarm 3, durch den der Greifer in drei Raumrichtungen bewegbar ist. Zudem ist der Greifer 2 um zwei Achsen drehbar mit dem Gelenkarm 3 verbunden. Die Handhabungseinrichtung weist mehrere unabhängige Antriebe auf, die durch eine programmierbare Steuereinrichtung steuerbar sind und eine positionsgenaue Bewegung des Greifers 2 ermöglichen.

Im Arbeitsbereich der Handhabungseinrichtung 1 befindet sich das Ende einer Fördereinrichtung 4 zur intermittierenden Zuführung der zu montierenden Luftreifen 5 zur Handhabungseinrichtung 1. Weiterhin befindet sich im Arbeitsbereich der Handhabungseinrichtung 1 eine Benetzungsstation 6, die zum Benetzen der Reifenwülste mit einem Gleitmittel vor der Montage dient. Die Benetzungsstation 6 umfaßt einen Tisch 7 mit einer flachen Wanne 8, in deren Mitte eine zylindrische, feststehende Bürste 9 angeordnet ist. Durch eine Zuführleitung im Zentrum der Bürste 9 wird mittels einer unterhalb der Wanne 8 angeordneten Pumpe 10 flüssiges Gleitmittel, beispielsweise Seifenlösung, aus der Wanne 8 zur Oberseite der Bürste 9 gefördert, wodurch die Bürste 9 mit Gleitmittel getränkt wird.

Im Arbeitsbereich der Handhabungseinrichtung 1 befindet sich ferner eine in Figur 1 nicht dargestellte Montagestation, in der die von der Fördereinrichtung 4 zugeführten Reifen auf der Montagestation zugeführte Felgen mit Hilfe der Handhabungseinrichtung 1 montiert werden. Die Montagestation kann in einer Montagelinie angeordnet sein, die der Montagestation nachgeschaltet eine zweite herkömmliche Montagestation enthält.

Figur 2 veranschaulicht eine Ausführungsform des Greifers 2, bei der an einem kreuzförmigen Träger 11 vier Greiferfinger 12 in Geradführungen 13 radial beweglich gelagert sind. Die Bewegungsachsen der Geradführungen 13 liegen in einer zum Träger 11 parallelen Ebene. Die Greiferfinger 12 erstrecken sich in der gleichen Richtung senkrecht zum Träger 11 und sind parallel zueinander ausgerichtet. Am geführten Ende der Greiferfinger 12 sind Anschlagplatten 14 befestigt, die sich parallel zu den Geradführungen 13 radial nach innen erstrecken und Anschlagflächen aufweisen, die zur Anlage an der Reifenseitenwand dienen. Der Träger 11 weist auf der den Greiferfingern 12 abgekehrten Seite eine mittige Anschlußfläche 16 auf, die zur Befestigung eines den Träger 11 mit dem Gelenkarm 3 verbindenden Anschlußstücks dient. Die radiale Bewegung der Greiferfinger 12 erfolgt durch eine auf der den Greiferfingern 12 abgekehrten Seite des Trägers 11 angeordnete Antriebseinrichtung, die mit einer Synchronisiereinrichtung zur synchronen Bewegung der Greiferfinger 12 versehen ist. Durch die synchrone Bewegung der Greiferfinger 12 wird sichergestellt, dass die Reifen beim Greifen zur Greifermitte ausgerichtet werden und damit eine definierte Position relativ zum Greifer 2 und zum Gelenkarm 3 erhalten, auf die die Bewegung der Handhabungseinrichtung 1 ausgerichtet werden kann.

Alternativ zu einer synchronen Bewegung der Greiferfinger 12 kann auch eine asynchrone Bewegung vorgesehen sein, wenn z.B. der Reifen durch den Greifer 2 in eine ovale Form gedrückt werden soll. Auch in diesem Fall muß aber die Bewegung der Greiferfinger 12 mittenorientiert erfolgen, so dass die Mitte des Reifenovals in der Greifermitte liegt.

Die vorzugsweise pneumatisch, aber auch elektrisch oder hydraulisch erzeugbare Anpreßkraft, mit der die Greiferfinger 12 beim Greifen eines Reifens an diesen angedrückt werden, sollte mit Hilfe der Steuerung veränderbar sein, damit Reifen unterschiedlicher Masse und Steifigkeit gleichermaßen gut zu handhaben sind und nicht beschädigt werden. Bei pneumatischem oder hydraulischen Antrieb der Greiferfinger kann die Anpreßkraft auf einfache Weise durch Änderung des Arbeitsdrucks auf den gewünschten Wert eingestellt werden.

Figur 3 zeigt einen Querschnitt durch einen als Blechformteil gestalteten Greiferfinger 12, der in einer Geradführung 13 an einem Arm des Trägers 11 längsbeweglich gelagert ist. Hierbei bildet ein Winkelblech mit einem kurzen Schenkel die auf die Reifenwand aufsetzbare Anschlagplatte 14 mit Anschlagfläche 15 und mit seinem langen Schenkel eine an die Reifenlauffläche anpreßbare Spannfläche 18. Ein Stegblech 19 stützt den Greiferfinger 12 biegesteif an der Geradführung 13 ab.

In Figur 4 ist der Vorgang des Benetzens der Reifenwülste mit einem Gleitmittel in der Benetzungsstation 6 veranschaulicht. Der von dem Greifer 2 an seiner Lauffläche gehaltene Luftreifen 5 wird mit Hilfe der Handhabungseinrichtung 1 über die Bürste 9 der Benetzungsstation bewegt und dann so weit abgesenkt, dass die Bürste 9 in die Öffnungen der beiden Reifenwülste 20, 21 eindringt. Bei diesem Vorgang ist der Reifen im wesentlichen zentrisch zur Bürste 9 ausgerichtet, deren Durchmesser im hier gezeigten Fall kleiner ist als der Innendurchmesser der Wülste 20, 21. Anschließend wird der Luftreifen 5 gegenüber der Bürste 9 so weit radial bewegt, bis die Wülste 20, 21 an einer Stelle die Bürste 9 berühren. Nun werden Luftreifen 5 und Greifer 2 mit ihrer zur Achse A der zylindrischen Bürste 9 parallelen Mittelachse B auf einer Kreisbahn um die Achse A der Bürste 9 einmal oder mehrmals herumbewegt, wobei die Bürste 9 an den Reifenwülsten 20, 21 entlanggleitet und diese vollständig mit Gleitmittel benetzt. Nach dem Benetzen wird der Luftreifen 5 wieder zur Bürste 9 zentriert und dann nach oben aus der Benetzungsstation entfernt.

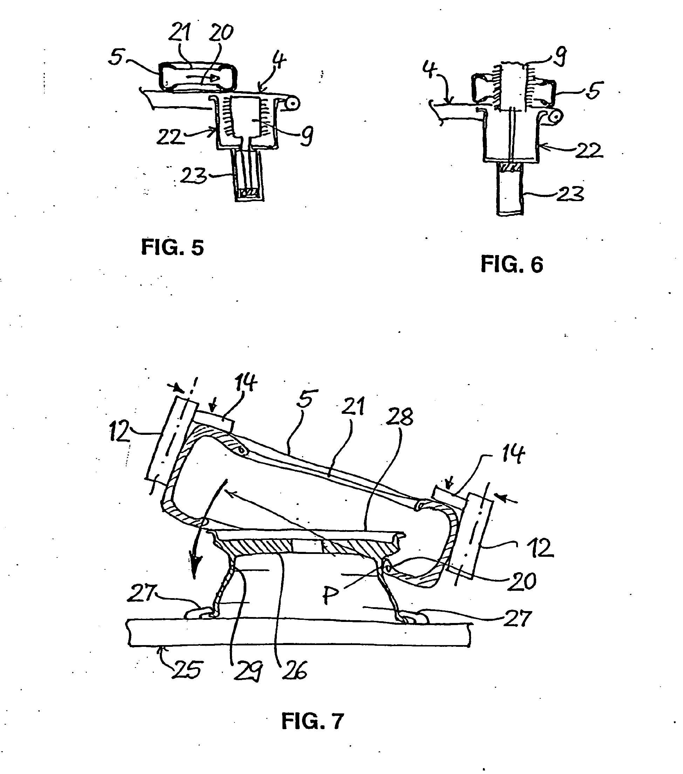

In den Figuren 5 und 6 ist eine in die Fördereinrichtung 4 zum Zuführen der Luftreifen 5 integrierte Benetzungsstation 22 gezeigt, die eine mit Hilfe eines pneumatischen Hubzylinders 23 vertikal verfahrbare Bürste 9 aufweist. Beim Einfördern des Luftreifens 5 ist die Bürste 9 der Benetzungsstation 22 bis unter die Einförderbahn des Luftreifens 5 abgesenkt, wie in Figur 5 gezeigt. Befindet sich der Luftreifen 5 in seiner Übergabeposition, in der er im wesentlichen mittig über der Bürste 9 angeordnet ist, so wird die Bürste 9 durch den Hubzylinder 23 angehoben und in den Reifen 5 hineinbewegt. Gleichzeitig wird von oben durch die Handhabungseinrichtung der Greifer herangeführt und der Luftreifen 5 gegriffen. Das anschließende Benetzen der Reifenwülste 20, 21 mit Gleitmittel erfolgt in der gleichen Weise wie oben anhand von Figur 4 beschrieben.

Nachdem die Reifenwülste eines von dem Greifer aufgenommenen Luftreifens 5 mit Gleitmittel benetzt sind, wird der Luftreifen 5 zu einer Montagestation 25 für die Montage des ersten Reifenwulstes 20 transportiert. Wie in Figur 7 gezeigt, ist in der Montagestation 25 die zum Reifen gehörige Felge 26 mittels geeigneter Spannmittel 27 in horizontaler Lage fixiert. Auf dem Weg zur Montagestation 25 bewegt die Handhabungseinrichtung 1 den Luftreifen 5 aus seiner ursprünglich horizontalen Lage in eine gegenüber der horizontalen, etwa in einem Winkel zwischen 20° und 50° geneigte Schräglage durch entsprechendes Schwenken des Greifers 2 relativ zum Gelenkarm 3. Der Luftreifen 5 wird dann auf die Felge 26 abgesenkt und mit der höchsten Stelle voran im wesentlichen in radialer Richtung mit dem unteren Wulst 20 über das obenliegende Felgenhorn 28 gestreift, wobei dieses teilweise in die Öffnung des Reifenwulstes 20 eindringt und der Reifenwulst 20 sich mit seiner tiefsten Stelle an das Tiefbett 29 der Felge 26 anlegt. Ist dieser Zustand erreicht, so wird die radiale Bewegung des Reifens relativ zur Felge 26 beendet und der Reifen um den Berührungspunkt P zwischen dem Reifenwulst 20 und dem Tiefbett 29 derart gedreht, dass der Reifen wieder in eine annähernd horizontale Lage gelangt. Hierbei wird der Reifenwulst 20, ohne dass es der Einwirkung großer Kräfte bedarf, vollständig über das Felgenhorn 28 gestreift.

Bei dem beschriebenen Montagevorgang können die an der Handhabungseinrichtung wirksam werdenden Kräfte und Belastungen gemessen und überwacht werden. Werden bei der Montage bestimmte vorgegebene Kraft- oder Belastungsgrößen überschritten, so deutet dies auf Montageprobleme hin. Es besteht daher die Möglichkeit, durch geeignete Auslegung der Steuerung der Handhabungseinrichtung in den Montagevorgang einzugreifen, bevor der Reifen ernsthaft beschädigt wurde. Hierdurch kann Ausschuß vermieden werden.

Nachdem der untere Reifenwulst 20 montiert ist, wird der Greifer geöffnet und in die Ausgangsposition zur Abholung des nächsten Reifens zurückgefahren. Die Felge wird mit dem teilmontierten Reifen von einer Fördereinrichtung in die nächste, nach dem herkömmlichen Montageverfahren arbeitende Montagestation transportiert. In dieser Montagestation wird dann nur noch der obere Reifenwulst montiert. Da die Montage des unteren Reifenwulstes entfällt, wird die Taktzeit für diesen Montagevorgang erheblich verkürzt. Vorteilhaft ist hierbei außerdem, dass die Montagewerkzeuge nun ausschließlich für die Montage des oberen Reifenwulstes optimiert werden können, z.B. erlaubt dies den Einsatz einer breiteren Aufziehrolle. Auch das Einrichten der Montagevorrichtung wird einfacher und die Prozeßsicherheit wird erhöht.

Es ist möglich, dass die Montage des unteren Reifenwulstes mit Hilfe der Handhabungseinrichtung bei schmalen und/oder weichen Reifen Probleme bereitet. Dies dürfte insbesondere dann zutreffen, wenn solche Reifen durch die vorherige Lagerung verformt sind, beispielsweise wenn oberer und unterer Reifenwulst aneinanderliegen. In diesen Fällen bietet eine Montageanlage mit einer ersten Montagestation nach der Erfindung und einer zweiten Montagestation herkömmlicher Art mit an der Felge entlanggeführten Montagewerkzeugen die Möglichkeit, beide Reifenwülste in herkömmlicher Weise zu montieren. Der Handhabungseinrichtung fällt dann die Aufgabe zu, den zugeführten Reifen zu übernehmen, in der Benetzungsstation mit Gleitmittel zu versehen und ihn dann in der ersten Montagestation in der für die weitere Montage geeigneten Lage auf der Felge zu positionieren. Felge und Reifen werden dann zur zweiten herkömmlichen Montagestation transportiert, wo die bei solchen Reifen übliche gemeinsame Montage von oberem und unterem Reifenwulst erfolgt.

Nach dem erfindungsgemäßen Verfahren kann die Handhabungseinrichtung mehrere Funktionen übernehmen, nämlich alle Reifentransportfunktionen zwischen der Reifenzuführeinrichtung und der ersten Montagestation, das Bewegen des Reifens in der Benetzungsstation und die Montage des unteren Reifenwulstes oder beider Reifenwülste. Im Vergleich zu den bekannten Lösungen vereinfacht sich durch den Einsatz der Handhabungseinrichtung insbesondere die Benetzungsstation ganz erheblich. Allerdings gleicht diese Vereinfachung den zusätzlichen Aufwand für die Handhabungseinrichtung nicht aus. Wirtschaftlich vorteilhaft werden Verfahren und Vorrichtung nach der Erfindung jedoch, wenn man die Taktzeit der Gesamtanlage und die Funktionsverbesserungen betrachtet. So konnte die Taktzeit gegenüber bisherigen Anlagen bei getrennter Montage der Reifenwülste um über 40 % verringert werden, was einen erheblichen wirtschaftlichen Nutzen für den Betreiber der Anlage bedeutet. Funktionsvorteile ergeben sich durch die frei programmierbare Bewegung der Handhabungseinrichtung, die eine exakte Positionierung der unterschiedlichen Reifengrößen gemäß den Erfordernissen ermöglicht. Hierdurch bleiben die Montagekräfte und Montagemomente kleiner als bei den bekannten Montageverfahren. Der Reifen wird geschont und es kommt seltener zu Störungen. Die Montagewerkzeuge zur Montage des oberen Reifenwulstes auf herkömmliche Art können auf diese Aufgabe hin optimiert werden. Zeitaufwendige Einricht- und Optimierungsarbeiten können dadurch entfallen und der obere Reifenwulst wird schonender montiert. Die schonendere und eigenspannungsärmere Montage führt zu einem besseren Sitz des Reifens auf der Felge und zur verbesserten Gleichförmigkeitswerten des montierten Rades. Auf eine separate Maschine zur Stabilisierung des Reifensitzes kann verzichtet werden. Die Handhabungseinrichtung kann an sämtlichen Bewegungsachsen Überlasten erfassen und dadurch Reifenbeschädigung, die nur schwer zu entdecken sind, wirkungsvoller verhindern. Auch kann durch die Überwachung der bei der Montage auftretenden Belastungen in den Montageprozeß eingegriffen werden, bevor der Reifen irreparabel geschädigt ist. Durch die Programmierbarkeit der Bewegungen der Handhabungseinrichtung läßt sich weiterhin der Einrichtaufwand verringern.

Mit dem erfindungsgemäßen Verfahren kann auch das Matchen von Luftreifen und Felge besonders einfach und kostengünstig durchgeführt werden. Um einen möglichst optimalen Rundlauf zu erreichen werden Luftreifen und Felgen bei der Herstellung mit sogenannten Matchpunkten markiert. Beim Luftreifen kennzeichnet der Matchpunkt das Maximum der ersten harmonischen Radialkraftschwankung. Bei der Felge kennzeichnet der Matchpunkt die tiefste Stelle der Rundlaufabweichung. Werden bei der Montage des Reifens beide Matchpunkte zur Deckung gebracht, das heißt in derselben Radialebene bezogen auf die Rotationsachse angeordnet, so werden nach der Erfahrung optimale Rundlaufeigenschaften erzielt.

Herkömmlich wird das Matchen in eigenständigen Matchmaschinen nach Beendigung der Reifenmontage durchgeführt. Hierbei wird mit Hilfe von Kameras die Lage der Matchpunkte erfaßt und dann der Reifen entsprechend relativ zur Felge gedreht, wozu ein nochmaliges Abdrücken der Reifenwülste von den Felgenhörnern erforderlich ist.

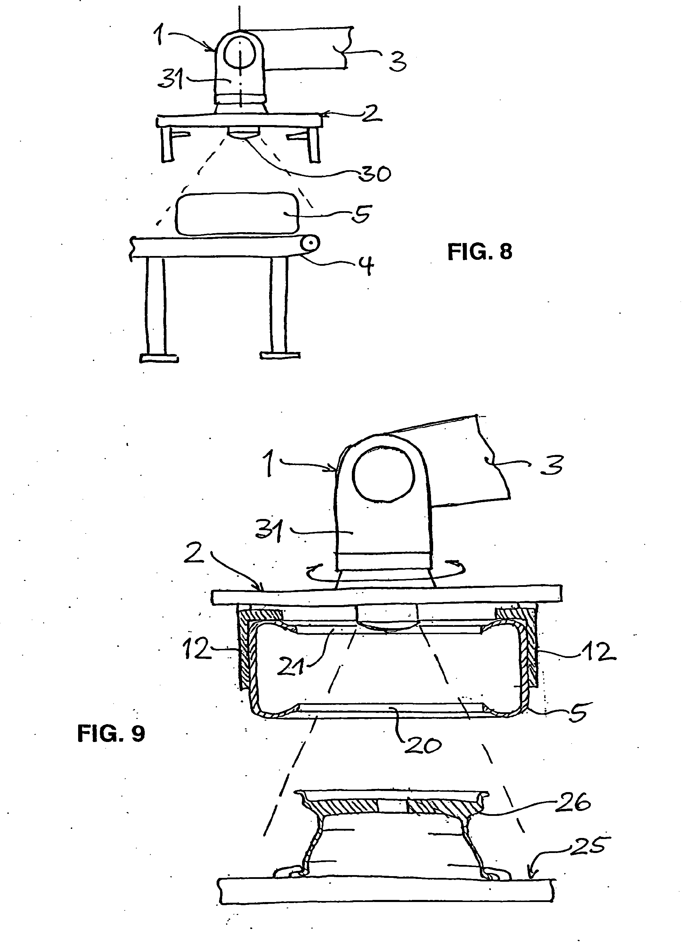

Bei dem in den Figuren 8 und 9 veranschaulichten Verfahren nach der Erfindung ist zur Erfassung der Matchpunkte der Greifer 2 der Handhabungseinrichtung 1 auf der dem Luftreifen zugewandten Unterseite mit einer vorzugsweise zentral angeordneten Kamera 30 ausgerüstet. Weiterhin ist der Greifer 2 an dem Gelenkarm 3 um eine mit der Rotationsachse eines vom Greifer 2 gehaltenen Luftreifens zusammenfallende Mittelachse B drehbar gelagert. Mit Hilfe eines am Gelenkarm 3 abgestützten Stellantriebs 31 ist der Greifer 2 in eine beliebige Drehwinkelstellung drehbar und in dieser feststellbar. Bei dem Stellantrieb 31 kann es sich um eine angetriebene Achse des die Handhabungseinrichtung 1 bildenden Industrieroboters oder um einen separaten Stellantrieb handeln.

Wie in Figur 8 gezeigt erfolgt die Erfassung des Matchpunktes des Luftreifens 5, wenn dieser mit Hilfe der Handhabungseinrichtung 1 von der den Luftreifen 5 zuführenden Fördereinrichtung 4 abgeholt wird. Der Greifer wird hierbei zunächst in eine Position über dem Luftreifen 5 bewegt, in der die Kamera 30 ein Bild der Oberseite des Reifens 5 erfassen kann. Die Kamera 30 ist an einen Bildauswertungscomputer angeschlossen, der die Drehwinkellage des Matchpunktes in Bezug auf den Greifer bestimmt. Daneben können weitere Bildinformationen zur Kontrolle des Montageprozesses auswertet werden. Beispielsweise kann das von der Kamera 30 erfaßte Bild auch zur genaueren Positionierung des Greifers 2 über dem Luftreifen 5 genutzt werden. Nach Erfassung der Bildinformation des Luftreifens 5 durch die Kamera 30 wird der Greifer 2 auf den Luftreifen 5 abgesenkt und dann durch Zusammenfahren der Greiferfinger 12 der Luftreifen 5 gegriffen. Die Handhabungseinrichtung 1 transportiert anschließend, wie oben beschrieben, den Luftreifen 5 zunächst zur Benetzungsstation und dann zur Montagestation 25.

In der Montagestation 25 wird, wie in Figur 9 gezeigt, der Greifer 2 zunächst über der dort bereits aufgespannten Felge 26 so positioniert, dass die Kamera 30 ein Bild von der Oberseite der Felge 26 und dem dort angebrachten Matchpunkt erfassen kann. Auch diese Bilddaten werden wiederum von dem angeschlossenen Bildauswertungscomputer ausgewertet und die Drehwinkellage des Matchpunktes der Felge 26 wird mit der Drehwinkellage des dem Greifer 2 zugeordneten Matchpunktes des von dem Greifer 2 gehaltenen Luftreifens 5 verglichen.

Die ermittelte Drehwinkeldifferenz wird als Steuersignal der Steuereinrichtung der Handhabungseinrichtung 1 übermittelt und von dieser gesteuert wird der Greifer 2 von dem Stellantrieb 31 um die ermittelte Drehwinkeldifferenz gedreht. Die beiden Matchpunkte werden dadurch zur Deckung gebracht. Danach wird der Luftreifen 5 wie bereits anhand von Figur 7 beschrieben zunächst mit seinem unteren Reifenwulst 20 auf der Felge montiert, wobei der Luftreifen 5 bis zum Abschluß des Montagevorgangs von dem Greifer 2 in der eingestellten Drehwinkelposition festgehalten wird. Gleiches gilt für die Montage des zweiten Reifenwulstes 21. Werden Felge und Luftreifen hierzu in eine andere Montagestation transportiert, so muß darauf geachtet werden, dass sie sich nicht zueinander verdrehen.

Durch das beschriebene Verfahren wird mit geringem Aufwand schon bei der Montage das Matchen von Luftreifen und Felge erreicht.

Abweichend von dem beschriebenen Verfahren kann das Matchen von Luftreifen und Felge auch nach der Montage des ersten Reifenwulstes erfolgen, indem der Luftreifen mit dem Greifer soweit angehoben wird, dass er sich leicht auf der Felge drehen lässt. Es besteht auch die weitere Möglichkeit, nach der Montage des ersten Reifenwulstes den Greifer zu öffnen, hochzufahren und die Lage der Matchpunkte an Luftreifen und Felge mit der Kamera zu erfassen, um anschließend den Luftreifen erneut zu greifen und in die Matchposition zu drehen. Dies hat den Vorteil, dass ein Verrutschen des Luftreifens bei der Montage das genaue Matchen nicht beeinträchtigen kann.

Alternativ zu der beschriebenen Anordnung der Kamera an dem Greifer kann die Erfassung der Matchpunkte von Luftreifen und Felge auch bereits bei der Zuführung zu den Stationen durch Kameras an den Fördereinrichtungen erfolgen. Beim Abholen des Luftreifens von der Fördereinrichtung 4 liegt dann die Drehwinkellage der Matchpunkte an Luftreifen und Felge und die sich daraus ergebende Drehwinkeldifferenz bereits als gespeicherte Information vor. In diesem Fall kann der Luftreifen beim Transport in die Montagestation mit Hilfe des Stellantriebs in die errechnete Matchposition gedreht werden, wobei selbstverständlich eine Drehwinkeländerung, die sich durch Schwenkung des Gelenkarms der Handhabungseinrichtung ergibt, ebenfalls zu berücksichtigen ist.

## Patentansprüche

1. Verfahren zur Montage eines Luftreifens (5) auf eine Tiefbettfelge (26) eines Fahrzeugrades, bei welchem der Luftreifen (5) mittels einer Handhabungseinrichtung (1) erfasst, von der Handhabungseinrichtung (1) an die in einer Spannvorrichtung (27) gehaltene Felge (26) herangeführt und durch eine kontrollierte Bewegung der Handhabungseinrichtung (1) mit zumindest dem einen der Felge (26) zugekehrten Reifenwulst (20) über ein Felgenhorn (28) der Felge (26) gestreift wird, **dadurch gekennzeichnet, dass** der für die Montage bereitgestellte Luftreifen (5) in seiner Bereitstellungsposition von der Handhabungseinrichtung (1) mittels eines Greifers (2) an seinem Außenumfang gegriffen und kontinuierlich bis zur Beendigung der Montage von zumindest einem Reifenwulst (20) durch radiales Spannen von dem Greifer (2) kraftschlüssig gehalten wird.

2. Verfahren nach Anspruch 1, **dadurch gekennzeichnet, dass** der Luftreifen (5) von der Handhabungseinrichtung (1) in einer zur Felge (26) geneigten Lage, in welcher die Rotationsachse des Luftreifens (5) einen Winkel mit der Rotationsachse der Felge (26) bildet, auf die Felge (26) derart aufgesetzt wird, dass ein Abschnitt des Felgenhorns (28) in die Öffnung des Reifenwulstes (20) eindringt und der Reifenwulst (20) im Bereich dieses Abschnitts des Felgenhorns (28) an einer Stelle des Tiefbetts (29) der Felge (26) zur Anlage kommt und dass anschließend durch Verringerung der Neigung des Luftreifens (5) gegenüber der Felge (26) der Reifenwulst (20) über das Felgenhorn (28) gestreift wird.

3. Verfahren nach Anspruch 2, **dadurch gekennzeichnet, dass** der Luftreifen (5) bei der Verringerung seiner Neigung gegenüber der Felge (26) um die Berührungsstelle zwischen dem Tiefbett (29) und dem Reifenwulst (20) gedreht wird.

4. Verfahren nach einem der vorhergehenden Ansprüche, **dadurch gekennzeichnet, dass** der Luftreifen (5) bei der Montage von der Handhabungseinrichtung (1) derart gehalten wird, dass der zu montierende Reifenwulst (20) eine ovale Form annimmt.

5. Verfahren nach einem der vorhergehenden Ansprüche, **dadurch gekennzeichnet, dass** ein Matchen von Luftreifen (5) und Felge (26) bei der Montage erfolgt.

6. Verfahren nach einem der vorhergehenden Ansprüche, **dadurch gekennzeichnet, dass** der Luftreifen (5) mit Hilfe der Handhabungseinrichtung (1) in eine Benetzungsstation (6) transportiert und in der Benetzungsstation (6) mit den Reifenwülsten (20, 21) an einer Auftrageinrichtung für Gleitmittel entlang bewegt wird.

7. Verfahren nach einem der vorhergehenden Ansprüche, **dadurch gekennzeichnet, dass** der Luftreifen (5) nach der Montage des ersten Reifenwulstes (20) von der Handhabungseinrichtung (1) erneut in eine gegenüber der Felge (26) geneigte Schräglage gebracht und derart relativ zur Felge (26) derart bewegt wird, dass ein Abschnitt des Felgenhorns (28) in die Öffnung des zweiten Reifenwulstes (21) eindringt und der zweite Reifenwulst (21) im Bereich dieses Abschnitts des Felgenhorns (28) in Kontakt mit dem Tiefbett (29) der Felge (26) gelangt, und dass anschließend durch Absenkung des Reifens (5) auf die Felge (26) und Verringerung der Neigung des Reifens (5) gegenüber der Felge (26) der zweite Reifenwulst (21) über das Felgenhorn (28) gestreift wird.

8. Verfahren nach einem der vorhergehenden Ansprüche, **dadurch gekennzeichnet, dass** die Montage des ersten Reifenswulstes (20) in einer ersten Montagestation (25) mit Hilfe der Handhabungseinrichtung (1) und dass die Montage des zweiten Reifenwulstes (21) in einer der ersten Montagestation nachgeschalteten zweiten Montagestation mit Hilfe von an dem Felgenhorn entlang geführten Montagewerkzeugen erfolgt.

9. Vorrichtung zur Durchführung des Verfahrens nach einem der vorhergehenden Ansprüche, umfassend eine Handhabungseinrichtung (1) mit einem in drei Richtungen bewegbaren Gelenkarm (3) und eine erste Montagestation (25) mit Spannmitteln (27) zum lösbaren Halten einer Felge (26), wobei die erste Montagestation (25) im Arbeitsbereich der Handhabungseinrichtung angeordnet ist, **dadurch gekennzeichnet, dass** der Gelenkarm (3) an seinem freien Ende einen Greifer (2) zum Greifen und Halten von Luftreifen (5) trägt, wobei der Greifer ist so gestaltet ist, dass er den Reifen an seinem Außenumfang greifen und durch radiales Spannen kraftschlüssig halten kann.

10. Vorrichtung nach Anspruch 9, **dadurch gekennzeichnet, dass** der ersten Montagestation (25) eine zweite Montagestation nachgeordnet ist, die mit zwischen Reifenwulst und Felgenhorn entlang führbaren Montagewerkzeugen ausgerüstet ist.

11. Vorrichtung nach einem der Ansprüche 9 und 10, **dadurch gekennzeichnet, dass** der Greifer (2) relativ zum Gelenkarm (3) der Handhabungseinrichtung (1) um wenigstens eine Achse bewegbar ist.

12. Vorrichtung nach einen der Ansprüche 9 bis 11, **dadurch gekennzeichnet, dass** der Greifer (2) mehrere, in gleichem Abstand von einer Mittelachse (B) angeordnete Greiferfinger (12) aufweist, die radial zur Mittelachse (B) bewegbar sind.

13. Vorrichtung nach Anspruch 12, **dadurch gekennzeichnet, dass** die Greiferfinger (12) mit einer Synchronisiereinrichtung gekoppelt sind, welche die radiale Bewegung der Greiferfinger (12) synchronisiert.

14. Vorrichtung nach einem der Ansprüche 12 und 13, **dadurch gekennzeichnet, dass** die von einer Antriebsvorrichtung erzeugte Schließkraft zum Andrücken der Greiferfinger (12) an einen gehaltenen Luftreifen (5) einstellbar ist.

15. Vorrichtung nach einem der Ansprüche 9 bis 14, **dadurch gekennzeichnet, dass** der Greifer (2) Anschläge (14) zur Anlage der Seitenwand eines Luftreifens (5) aufweist.

16. Vorrichtung nach einem der Ansprüche 9 bis 15, **dadurch gekennzeichnet, dass** der Greifer (2) an dem Gelenkarm (3) um eine im Zentrum der Greiferfinger (12) liegende Mittelachse (B) drehbar und mit Hilfe eines Stellantriebs (31) in eine beliebige Drehwinkelstellung bewegbar und in dieser feststellbar ist.

17. Vorrichtung nach einem der Ansprüche 9 bis 16, **dadurch gekennzeichnet, dass** an dem Greifer (2) eine Kamera (30) zu Erfassung von Markierungen auf dem Luftreifen (5) und/oder der Felge (26) angeordnet ist.

18. Vorrichtung nach einem der Ansprüche 9 bis 17, **dadurch gekennzeichnet, dass** die Spannmittel (27) der ersten Montagestation (25) um die Rotationsachse der Felge (26) drehbar und in einer beliebigen Drehwinkelstellung feststellbar sind.

19. Vorrichtung nach einem der Ansprüche 9 bis 18, **dadurch gekennzeichnet, dass** im Arbeitsbereich der Handhabungseinrichtung (1) eine Benetzungsstation (6) zur Benetzung der Reifenwülste (20, 21) mit einem Gleitmittel angeordnet ist.

20. Vorrichtung nach Anspruch 19, **dadurch gekennzeichnet, dass** die Benetzungsstation (6) in die Fördereinrichtung (4) zum Zufördern zu montierender Luftreifen (5) integriert ist.

21. Vorrichtung nach einem der Ansprüche 9 bis 20, **dadurch gekennzeichnet, dass** die Handhabungseinrichtung (1) Belastungssensoren zur Erfassung der bei der Reifenmontage auftretenden Belastungen aufweist.

22. Vorrichtung nach einem der Ansprüche 9 bis 21, **dadurch gekennzeichnet, dass** die Handhabungseinrichtung (1) eine programmierbare Steuereinrichtung aufweist.

23. Vorrichtung nach Anspruch 22, **dadurch gekennzeichnet, dass** die Steuereinrichtung eine Überwachungseinrichtung aufweist, welche die Signale der Belastungssensoren überwacht.

## Claims

1. Method for mounting a pneumatic tyre (5) on a well base rim (26) of a motor vehicle wheel, in which the pneumatic tyre (5) is grasped by means of a manipulator (1), brought up by the manipulator (1) to the rim (26) held in a clamping device (27) and slipped with at least the one tyre bead (20) facing the rim (26) over one rim flange (28) by controlled movement of the manipulator, **characterised in that** the pneumatic tyre (5) delivered for mounting is gripped in its delivery position by its outer circumference by the manipulator (1) by means of a gripper (2) and is held continuously in non-interlocking manner by radial clamping by the gripper (2) until mounting of at least one tyre bead (20) has been completed.

2. Method according to claim 1, **characterised in that** the pneumatic tyre (5) is placed onto the rim (26) by the manipulator (1) in a position inclined relative to the rim (26), in which the axis of rotation of the pneumatic tyre (5) forms an angle with the axis of rotation of the rim (26), in such a way that a portion of the rim flange (28) penetrates into the opening of the tyre bead (20) and the tyre bead (20) comes to rest against a point of the well base (29) of the rim (26) in the region of this portion of the rim flange (28) and **in that** the tyre bead (20) is then slipped over the rim flange (28) by reducing the inclination of the pneumatic tyre (5) relative to the rim (26) .

3. Method according to claim 2, **characterised in that** the pneumatic tyre (5) is turned, on reduction of its inclination relative to the rim (26), about the point of contact between the well base (29) and the tyre bead (20).

4. Method according to any one of the preceding claims, **characterised in that** the pneumatic tyre (5) is held during mounting by the manipulator (1) in such a way that the tyre bead (20) to be mounted adopts an oval shape.

5. Method according to any one of the preceding claims, **characterised in that** matching of pneumatic tyre (5) and rim (26) takes place during mounting.

6. Method according to any one of the preceding claims, **characterised in that** the pneumatic tyre (5) is transported by means of the manipulator (1) to a soaping station (6) and is moved along in the soaping station (6) with the tyre beads (20, 21) against a lubricant application means.

7. Method according to any one of the preceding claims, **characterised in that** the pneumatic tyre (5) is brought once again into an oblique position inclined relative to the rim (26) by the manipulator (1) after mounting of the first tyre bead (20) and moved in such a way relative to the rim (26) that a portion of the rim flange (28) penetrates into the opening of the second tyre bead (21) and the second tyre bead (21) comes into contact with the well base (29) of the rim (26) in the region of this portion of the rim flange (28), and **in that** then the second tyre bead (21) is slipped over the rim flange (28) by lowering the tyre (5) onto the rim (26) and reducing the inclination of the tyre (5) relative to the rim (26).

8. Method according to any one of the preceding claims, **characterised in that** mounting of the first tyre bead (20) is effected in a first mounting station (25) by means of the manipulator (1) and **in that** mounting of the second tyre bead (21) is effected in a second mounting station downstream of the first mounting station by means of mounting tools passed along the rim flange.

9. Apparatus for carrying out the method according to any one of the preceding claims, comprising a manipulator (1) with an articulated arm (3) movable in three directions, and a first mounting station (25) with clamping means (27) for releasably holding a rim (26), wherein the first mounting station (25) is arranged within the working range of the manipulator, **characterised in that** the articulated arm (3) bears at its free end a gripper (2) for gripping and holding pneumatic tyres (5), wherein the gripper (2) is so designed that the tyre may be gripped by its outer circumference and held in non-interlocking manner by radial clamping.

10. Apparatus according to claim 9, **characterised in that** a second mounting station is arranged downstream of the first mounting station (25) and is provided with mounting tools which may pass along between tyre bead and rim flange.

11. Apparatus according to anyone of claims 9 and 10, **characterised in that** the gripper (2) is movable relative to the articulated arm (3) of the manipulator (1) about at least one axis.

12. Apparatus according to any one of claims 9 to 11, **characterised in that** the gripper (2) comprises a plurality of gripper fingers (12) arranged equidistantly from a central axis (B) and movable radially relative to the central axis (B).

13. Apparatus according to claim 12, **characterised in that** the gripper fingers (12) are coupled with a synchronising means, which synchronises the radial movement of the gripper fingers (12).

14. Apparatus according to either claim 12 or claim 13, **characterised in that** the closing force, produced by a drive device, for pressing the gripper fingers (12) against a pneumatic tyre (5) which is being held is adjustable.

15. Apparatus according to any one of claims 9 to 14, **characterised in that** the gripper (2) comprises limit stops (14) for resting against the side wall of a pneumatic tyre (5).

16. Apparatus according to any one of claims 9 to 15, **characterised in that** the gripper (2) on the articulated arm (3) is rotatable about a central axis (B) located in the centre of the gripper fingers (12) and may be moved by means of an actuator (31) into any desired rotation angle position and fixed therein.

17. Apparatus according to any one of claims 9 to 16, **characterised in that** a camera (30) is arranged on the gripper (2) for detecting marks on the pneumatic tyre (5) and/or the rim (26).

18. Apparatus according to any one of claims 9 to 17, **characterised in that** the clamping means (27) of the first mounting station (25) may be rotated about the axis of rotation of the rim (26) and fixed in any desired rotation angle position.

19. Apparatus according to any one of claims 9 to 18, **characterised in that** a soaping station (6) for soaping the tyre beads (20, 21) with a lubricant is arranged within the working range of the manipulator (1).

20. Apparatus according claim 19, **characterised in that** the soaping station (6) is incorporated into the conveyor means (4) for delivering pneumatic tyres (5) to be mounted.

21. Apparatus according to anyone of claims 9 to 20, **characterised in that** the manipulator (1) comprises load sensors for detecting the loads arising during tyre mounting.

22. Apparatus according to any one of claims 9 to 21, **characterised in that** the manipulator (1) comprises a programmable control means.

23. Apparatus according to claim 22, **characterised in that** the control means comprises a monitoring means, which monitors the signals from the load sensors.

## Revendications

1. Procédé pour le montage d'un pneumatique (5) sur une jante à base creuse (26) d'une roue de véhicule, dans lequel le pneumatique (5) est saisi au moyen d'un dispositif de manipulation (1), amené par le dispositif de manipulation (1) sur une jante (26) maintenue par un dispositif de retenue (27) et passé par un mouvement contrôlé du dispositif de manipulation (1) avec au moins un premier talon de pneu (20) adjacent à la jante (26) par-dessus le rebord de jante (28) de la jante (26), **caractérisé en ce que** le pneumatique (5) préparé pour le montage est saisi dans sa position de préparation par sa périphérie extérieure par le dispositif de manipulation (1) au moyen d'une pince (2) et est maintenu par force de façon continue jusqu'à la fin du montage d'au moins un talon de pneu (20) par serrage radial de la pince (2).

2. Procédé selon la revendication 1, **caractérisé en ce que** le pneumatique (5) est posé de telle sorte sur la jante (26) par le dispositif de manipulation (1) dans une position inclinée par rapport à la jante (26) dans laquelle l'axe de rotation du pneumatique (5) forme un angle avec l'axe de rotation de la jante (26), qu'une partie du rebord de jante (28) pénètre dans l'ouverture du talon de pneu (20) et que le talon de pneu (20) dans la zone de cette partie du rebord de jante (28) vient en contact en un point de la base creuse (29) de la jante (26), et qu'ensuite le talon de pneu (20) est passé par-dessus le rebord de jante (28) en réduisant l'inclinaison du pneumatique (5) par rapport à la jante (26).

3. Procédé selon la revendication 2, **caractérisé en ce que** le pneumatique (5) est tourné autour du point de contact entre la base creuse (29) et le talon de pneu (20) lors de la réduction de son inclinaison par rapport à la jante (26).

4. Procédé selon l'une des revendications précédentes, **caractérisé en ce que** lors du montage, le pneumatique (5) est maintenu de telle sorte par le dispositif de manipulation (1) que le talon de pneu à monter (20) prend une forme ovale.

5. Procédé selon l'une des revendications précédentes, **caractérisé en ce qu'**une correspondance du pneumatique (5) et de la jante (26) s'effectue lors du montage.

6. Procédé selon l'une des revendications précédentes, **caractérisé en ce que** le pneumatique (5) est transporté à l'aide du dispositif de manipulation (1) dans une station de lubrification (6) et est déplacé dans la station de lubrification (6) avec les talons de pneu (20, 21) sur un dispositif d'enduction pour agent lubrifiant.

7. Procédé selon l'une des revendications précédentes, **caractérisé en ce que** le pneumatique (5) est amené après le montage du premier talon de pneu (20) par dispositif de manipulation (1) à nouveau dans une position inclinée et est déplacé par rapport à la jante (26) de sorte qu'une partie du rebord de jante (28) pénètre dans l'orifice du second talon de pneu (21) et que le second talon de pneu (21) arrive au niveau de cette partie du rebord de jante (28) en contact avec la base creuse (29) de la jante (26) et **en ce qu'**ensuite en descendant le pneu (5) sur la jante (26) et en réduisant l'inclinaison du pneu (5) par rapport à la jante (26), le second talon de pneu (21) est passé par-dessus le rebord de jante (28).

8. Procédé selon l'une des revendications précédentes **caractérisé en ce que** le montage du premier talon de pneu (20) s'effectue dans une première station de montage (25) à l'aide d'un dispositif de manipulation (1) et **en ce que** le montage du second talon de pneu (21) s'effectue dans une seconde station de montage disposée après la première station de montage à l'aide d'outils de montage guidés le long du rebord de jante.

9. Dispositif de mise en oeuvre du procédé selon l'une des revendications précédentes, comprenant un dispositif de manipulation (1) avec un bras articulé (3) mobile dans trois directions et une première station de montage (25) avec des moyens de retenue (25) pour fixer une jante (26) de façon réversible, la première station de montage (25) étant disposée dans la zone de travail du dispositif de manipulation, **caractérisé en ce que** le bras articulé (3) porte sur son extrémité libre une pince (2) pour saisir et maintenir des pneumatiques (5), la pince étant conçue de telle sorte qu'elle peut saisir le pneu par sa périphérie extérieure et le tenir par force par serrage radial.

10. Dispositif selon la revendication 9, **caractérisé en ce qu'**une seconde station de montage est disposée après la première station de montage (25) et est munie d'outils de montage pouvant être guidés le long du rebord de jante.

11. Dispositif selon l'une des revendications 9 et 10, **caractérisé en ce que** la pince (2) peut être déplacée autour d'au moins un axe par rapport au bras articulé (3) du dispositif de manipulation (1).

12. Dispositif selon l'une des revendications 9 à 11, **caractérisé en ce que** la pince (2) comporte plusieurs doigts de pince (12) disposés à même distance d'un axe central (B) et qui peuvent être déplacés radialement vers l'axe central (B).

13. Dispositif selon la revendication 12, **caractérisé en ce que** les doigts de pince (12) sont couplés à un dispositif de synchronisation qui synchronise le déplacement radial des doigts de pince (12).

14. Dispositif selon l'une des revendications 12 et 13, **caractérisé en ce que** la force de fermeture générée par un dispositif d'entraînement pour appuyer les doigts de pince (12) sur un pneumatique (5) maintenu peut être ajustée.

15. Dispositif selon l'une des revendications 9 à 14, **caractérisé en ce que** la pince (2) comporte des butées (14) pour l'appui de la paroi latérale d'un pneumatique (5).

16. Dispositif selon l'une des revendications 9 à 15, **caractérisé en ce que** la pince (2) peut être tournée sur le bras articulé (3) autour d'un axe central (B) situé au centre des doigts de pince (12) et déplacée dans n'importe quelle position angulaire et maintenue dans celle-ci.

17. Dispositif selon l'une des revendications 9 à 16, **caractérisé en ce qu'**une caméra (30) destinée à saisir des marquages sur le pneumatique (5) et/ou la jante (26) est disposée sur la pince (2).

18. Dispositif selon l'une des revendications 9 à 17, **caractérisé en ce que** les moyens de retenue (27) de la première station de montage (25) peuvent être tournés autour de l'axe de rotation de la jante (26) et être maintenus dans n'importe quelle position angulaire.

19. Dispositif selon l'une des revendications 9 à 18, **caractérisée en ce qu'**une station de lubrification (6) pour enduire les talons de pneu (20, 21) avec un agent lubrifiant est disposée dans la zone de travail du dispositif de manipulation (1).

20. Dispositif selon la revendication 19, **caractérisé en ce que** la station de lubrification (6) est intégrée dans le dispositif de convoyage (4) pour transporter les pneumatiques à monter (5).

21. Dispositif selon l'une des revendications 9 à 20, **caractérisé en ce que** le dispositif de manipulation (1) comporte des capteurs de sollicitation pour détecter les sollicitations survenant lors du montage des pneus.

22. Dispositif selon l'une des revendications 9 à 21, **caractérisé en ce que** le dispositif de manipulation (1) comporte un dispositif de commande programmable.

23. Dispositif selon la revendication 22, **caractérisé en ce que** le dispositif de commande comporte un dispositif de surveillance qui surveille les signaux des capteurs de sollicitation.
